# EUROPÄISCHE PATENTANMELDUNG

(11) **EP 1 818 472 A2**
(43) Veröffentlichungstag der Anmeldung: **15.08.2007**
(21) Anmeldenummer: 07002895.6
(22) Anmeldetag: 12.02.2007
(51) Int. Cl.: E04B 7/16, F24J 2/04

(54) **Solaranlagengebäude**

(30) Priorität: 13.02.2006 DE 202006002314 U
(71) Anmelder: Eggert GmbH & Co. KG, 89613 Oberstadion (DE)
(72) Erfinder: Eggert, Ferdinand, 89613 Oberstadion (DE)
(74) Vertreter: Cremer, Ulrike Theresia

(57) **Zusammenfassung**

Die Erfindung betrifft ein in Abhängigkeit vom relativen Sonnenstand im Tagesverlauf nachführbares Solaranlagengebäude, das aus einem Gebäudeunterteil (102) und einem darauf gelagerten Gebäudeoberteil (103) mit Dach (101) besteht, wobei auf dem Dach Solarmodule (107) montierbar sind, wobei eine Antriebseinrichtung vorgesehen ist, mit der Gebäudeoberteil und Gebäudeunterteil rotatorisch gegeneinander verdrehbar sind. Erfindungsgemäße ist an dem Gebäudeunterteil zumindest eine antreibbare Rolle (121) ortsfest gelagert, durch die eine an dem Gebäudeoberteil fixierte Rundlaufschiene (115) drehbar geführt ist, so dass eine Relativbewegung zwischen dem Gebäudeoberteil mit Dach und dem Gebäudeunterteil erfolgt.

## Beschreibung

Die vorliegende Erfindung betrifft ein in Abhängigkeit vom relativen Sonnenstand im Tagesverlauf nachführbares Solaranlagengebäude gemäß dem Oberbegriff des Anspruches 1.

In den letzten Jahren wurden vermehrt Solarmodule auf Gebäuden oder speziellen Gestellen aufgestellt. Mit ihnen wird das auf die Oberfläche einstrahlende Sonnenlicht eingefangen. Bevorzugt dienen die Solarmodule der Erzeugung von elektrischem Strom, sogenannte Photovoltaikmodule. Die erfindungsgemäße Anlage ist jedoch ebenfalls zur Lagerung von Solarmodulen zur Erzeugung von Warmwasser geeignet. Es wurde erkannt, dass die Energieausbeute erhöht werden kann, indem die Solarmodule im Tagesverlauf der Sonne nachgeführt werden, so dass die Sonne stets in einem möglichst optimalen Winkel auf die Oberfläche der Solarmodule einstrahlt.

Ein solches dem relativen Sonnenstand nachführbares Gestell ist aus der DE 20 2005 002 411 U1 bekannt. Dort wird ein Gestell zur Lagerung von Solarmodulen mit einem bodenfest montierbaren Unterteil und einem drehbar auf dem Unterteil gelagerten Oberteil beschrieben. Die Nachführung der Solarmodule geschieht im Tagesverlauf rotatorisch mit Hilfe einer Antriebseinrichtung mit Kettenführung. Dieses Gestell ist jedoch in Abhängigkeit von der eingesetzten Solarmodulfläche vergleichsweise groß und nimmt folglich relativ viel Platz in Anspruch. Eine Funktion über die eines Gestells zur Lagerung von Solarmodulen hinaus, kann das Gestell nicht erfüllen. Die Steuereinrichtung für die Anlage ist im Zentrum des Gestelles angebracht und nimmt dadurch vergleichsweise viel Platz weg. Zudem ist das Gestell nicht regendicht, so dass es auch als Lagerfläche unbrauchbar ist. Das Gestell entspricht weiter nicht den Sicherheitsvorschriften, da die Module bei ihrer Zerstörung auf Personen oder Gegenstände herabfallen können. Auch Revisionsarbeiten sind bei solchen Gestellen schwerlich möglich. Überdies ist durch die entsprechende Gestaltung der Konstruktion das Einbringen von zu lagernden Gegenständen nur unter erschwerten Bedingungen möglich. Ein ähnliches Gestell ist in der DE 103 43 374 A1 offenbart.

Aus der DE 20 2004 003 158 U1 und der DE 200 04 383 U1 sind eine nachführbare Solaranlagenhalle bzw. ein Solarkarusell als Gartenhaus oder Ähnliches bekannt, bei denen es sich um Gestelle handelt, die aus einem bodenfest montierbaren Untergestell und aus einem darauf drehbar gelagerten Oberteil bestehen. Auf dem Dach des Oberteils sind Solarmodule montierbar. Das Oberteil weist zudem Wände auf, die die Gebäude nach außen hin begrenzen. In zumindest einer der Wände ist eine Öffnung vorgesehen, durch die in dem Gebäude zu lagernde Gegenstände eingebracht werden können. In Abhängigkeit von der Dimensionierung der Gebäude und auch von der Öffnung, über die zu lagernde Gegenstände eingebracht werden, sind diese vorbekannten Solaranlagengebäude für die Lagerung von kleineren Geräten, wie beispielsweise Gartengeräten oder Gartenmöbeln, bis zur Aufbewahrung und Unterbringung von Fahrzeugen oder landwirtschaftlichen oder sonstigen Maschinen und Anlagen geeignet.

Ein anderer Ansatz wird in den DE 10 2005 037 919 A1 und J P 7090939 beschrieben. In den dort offenbarten Gebäuden sind ebenfalls Solarmodule auf dem Dach fixiert. Im Gegensatz zu den oben beschriebenen Gebäuden und Gestellen bleiben jedoch jeweils die Wände ortsfest, wohingegen eine Plattform auf dem Dach bzw, das Dach selbst eine Drehbewegung relativ zu den Wänden durchmachen. In der deutschen Patentanmeldung ist zur Ausführung der Drehbewegung eine drehbare Plattform vorgesehen, wobei der Träger mit Laufschiene, die die Rundlaufschiene ausmachen, auf dem Dach ortsfest montiert sind, während auf der Unterseite der Plattform antreibbare Rollen befestigt sind. Derartige Konstruktionen brachten jedoch statische Probleme des Dachaufbaus mit sich. Auch war in der Praxis die Verkabelung der Rollen für den Antrieb und die Steuerung schwierig durchzuführen und es zeigten sich Probleme mit Kabelbrüchen.

Aufgabe der vorliegenden Erfindung ist, ein Solaranlagengebäude zur Verfügung zu stellen, das die oben geschilderten Probleme vermeidet. Insbesondere soll ein statisch stabiles und sicheres Gebäude bereitgestellt werden. Diese Aufgabe wird gelöst durch ein Solaranlagengebäude nach Anspruch 1. Vorteilhafte Ausgestaltungen sind Gegenstand der Unteransprüche.

Das erfindungsgemäße, in Abhängigkeit vom relativen Sonnenstand im Tagesverlauf nachführbare Solaranlagengebäude besteht aus einem Gebäudeunterteil und einem darauf gelagerten Gebäudeoberteil mit Dach, wobei auf dem Dach Solarmodule montierbar sind. Es ist eine Antriebseinrichtung vorgesehen, mit der Gebäudeoberteil und Gebäudeunterteil rotatorisch gegeneinander verdrehbar sind. Erfindungsgemäß ist an dem Gebäudeunterteil zumindest eine antreibbare Rolle ortsfest gelagert, durch die eine an dem Gebäudeoberteil fixierte Rundlaufschiene drehbar geführt ist, so dass eine Relativbewegung zwischen dem Gebäudeoberteil mit Dach und dem Gebäudeunterteil erfolgt.

Durch das Vorsehen der Rundlaufschiene am Cebäudeoberteil wird dessen Statik verbessert, da die Rundlaufschiene auch statische Funktion hat. Diese Statikverbesserung wird außerdem ohne zusätzliches Gewicht bzw. Auflast auf das Gebäude erzielt. Im Gegenteil, es kann durch die ortsfeste Montage der Antriebsrollen Material eingespart werden, da im Stand der Technik sowohl am feststehenden Gebäudeteil mit Rundlaufschiene als auch am drehenden Gebäudeteil mit Rollen jeweils entsprechende Trägerkonstruktionen zusätzlich zu den tragenden Gebäudeteilen notwendig waren. Nun bedarf es lediglich der Rundlaufschiene am drehenden Gebäudeteil und diese erfüllt darüber hinaus noch statische Funktion. Dies sind gegenüber den bekannten Konstruktionen wesentliche Vorteile.

Ferner ist von Vorteil, dass die Verkabelung der zumindest einen Antriebsrolle statisch erfolgen kann, da, anders als im Stand der Technik, die Rollen ortsfest sind und die Drehbewegung nicht mitmachen. Dadurch reduzieren sich auch Beschädigungen der Verkabelung. Keiner der in diesem und im vorangegangenen Absatz genannten Vorteile ist mit den eingangs zitierten Vorrichtungen zu erzielen. Einzig durch die erfindungsgemäße Konstruktion gelang es, die bekannten Nachteile überraschend zu überwinden.

Mit den Begriffen Gebäudeunterteil und Gebäudeoberteil sind Abschnitte eines Gebäudes bezeichnet, wobei das Gebäudeoberteil das Dach trägt. Das Solaranlagengebäude kann Wände aufweisen, wobei mit Wänden sowohl Geschlossene als auch Offene, z. B. in der Art eines Gestelles oder Gerüstes, gemeint sind. Bei Vorhandensein von Wänden können diese Bestandteil sowohl des Oberteils als auch des Unterteils sein und es können auch der untere Bereich der Wände Teil des Gebäudeunterteils und der obere Bereich der Wände Teil des Gebäudeoberteils sein.

In der Regel sind mehrere antreibbare Rollen vorgesehen, insbesondere 2-4 Antriebsrollen. Daneben sind auch zumindest eine, insbesondere mehrere passive Rollen vorgesehen. Dadurch wird die Laufstabilität verbessert und Laufruhe erzielt. Alle Rollen sind erfindungsgemäß ortsfest an dem Gebäudeunterteil montiert In Abhängigkeit von der Gebäudeart können die Rollen auf Stehern, Stützen, Betongurten, Mauern, Holzbalken etc. montiert werden. Entscheidend ist lediglich, dass die notwendige Stabilität gewährleistet ist. Das drehbare Dach kann somit sowohl auf Hallen wie Messe-, Fabrik-, Lager- und Mehrzweckhallen aufgebaut sein als auch auf Wohn-, Büro- und Schulgebäuden. Besonders vorteilhaft Ist, dass auch der Raum innerhalb des drehenden Gebäudeoberteils, beispielsweise der Dachraum, genutzt werden kann, sowohl ohne dass er eine Drehung erfährt als auch, indem die Drehbewegung genutzt wird und ein drehbarer Raum, z. B. durch Einziehen einer Plattform, geschaffen wird.

Eine bevorzugte Ausführung weist eine Verankerung auf, mit deren Hilfe das Oberteil des Solaranlagengebäudes auf dem Unterteil verankerbar ist. Eine solche Verankerung kann beispielsweise eine Vorrichtung in Hakenform sein, die am oberen Ende des Unterteils befestigt ist und die Rundlaufschiene des Oberteils zumindest teilweise umgreift. Bevorzugt ist eine solche hakenförmige Vorrichtung im Bereich einer Antriebsrolle befestigt. Noch bevorzugter sind pro Antriebsrolle zwei Verankerungsvorrichtungen vorgesehen, wobei die beiden Verankerungsvorrichtungen insbesondere spiegelbildlich zueinander angeordnet sind. Weiter können auch im Bereich von passiven Rollen Verankerungsvorrichtungen montiert sein. Eine andere Ausführung sieht vor, dass die Verankerungsvorrichtung einen hakenförmigen Fortsatz aufweist, der im Bereich von zumindest einer Antriebsrolle befestigt ist und die Rundlaufschiene zumindest teilweise umgreift.

Gemäß einer weiteren Ausführung ist auf der Rundlaufschiene eine Laufschiene montiert, auf welcher die Rollen laufen. Durch Verwendung eines entsprechend abriebfesten Materials als Laufschiene wird der Abrieb der Rundlaufschiene verhindert. Bei Vorsehen einer Laufschiene sieht eine weitere Ausführungsform der Verankerungsvorrichtung vor, dass zumindest eine Führungsrolle vorgesehen ist, welche an die Laufschiene seitlich anliegt. Insbesondere sind zwei parallel angeordnete Führungsrollen vorgesehen, die an die Laufschiene von beiden Seiten anliegen.

Das erfindungsgemäße Gebäude dreht sich in Abhängigkeit vom relativen Sonnenstand im Tagesverlauf, wobei bevorzugt ein Winkel von ca. 270° durchfahren wird. Mit Hilfe einer Steuerung wird das Solaranlagengebäude in einem bestimmten zeitlichen Abstand, in der Regel nach wenigen Minuten, folgend der Sonne um eine definierte Gradzahl weiterbewegt. Damit ist es stets optimal zur Sonne ausgerichtet. Das Solaranlagengebäude der Erfindung weist zudem bevorzugt eine Vorrichtung zur Positionsbestimmung auf. Für eine solche Positionsbestimmung ist ein Inkrementaldrehgeber vorgesehen. Ein bevorzugt gummibereiftes Rad wird über eine Feder auf die Rundschiene des Gebäudeoberteiles gepresst. Das gummibereifte Rad ist über eine Welle mit dem Inkrementaldrehgeber verbunden. Der Inkrementaldrehgeber misst die Stellbewegung des Antriebsmotors und kann so die Relativposition an die Steuerung weitergeben.

Erfindungsgemäß ist weiter vorgesehen, dass Sensoren, insbesondere mechanische Endschalter, für die Endpositionierung und Referenzierung vorgesehen sind. Damit ist die Relativstellung zwischen Oberteil und Unterteil in zumindest einer Winkelposition feststellbar, so dass eine Referenzierung stets aufs Neue erfolgen kann. Eine solche Neukalibrierung erfolgt vorzugsweise täglich. Dadurch wird sichergestellt, dass das Solaranlagengebäude auch über einen längeren Zeitraum hinweg zuverlässig stets optimal zur Sonne ausgerichtet wird. Bevorzugt sind drei Endschalter vorgesehen, von denen z. B. je einer im Süden, Osten und Westen montiert sein können.

Eine weitere Ausführung der Erfindung sieht vor, dass ein Windmessgerät vorgesehen ist, dessen Daten an eine Steuerung gemeldet werden. Ab einer vorgebbaren Windstärke wird das Gebäude dann automatisch in eine Position verbracht, so dass der Wind möglichst geringen Schaden anrichten kann. Das Gebäude wird möglichst in den Wind gedreht, so dass der Wind nicht von der Seite aus angreift, sondern von dort, wo die Solarmodule befestigt sind.

Nachfolgend wird die Erfindung anhand der Zeichnungen näher erläutert und beschrieben. Es zeigen:
- Fig. 1: eine Draufsicht auf eine erfindungsgemäße Solaranlagenhalle;
- Fig. 2: eine Vorderansicht eines Schnittes entlang der Linie A-A in Fig. 1;
- Fig. 3: das Detail III in Fig. 2;
- Fig. 4: eine Seitenansicht (A) und eine Vorderansicht (B) eines Details der erfindungsgemäßen Solaranlagenhalle;
- Fig. 5: weitere Details einer erfindurigsgomäßen Solaranlagenhalle in Vorderansicht;
- Fig. 6: eine weitere Ausführungsform einer erfindungsgemäßen Verankerungsvorrichtung;
- Fig. 7: eine weitere Ausführungsform eines Solaranlagengebäudes im Detail; und
- Fig. 8: das Detail der Fig. 7 in einer weiteren Ansicht.

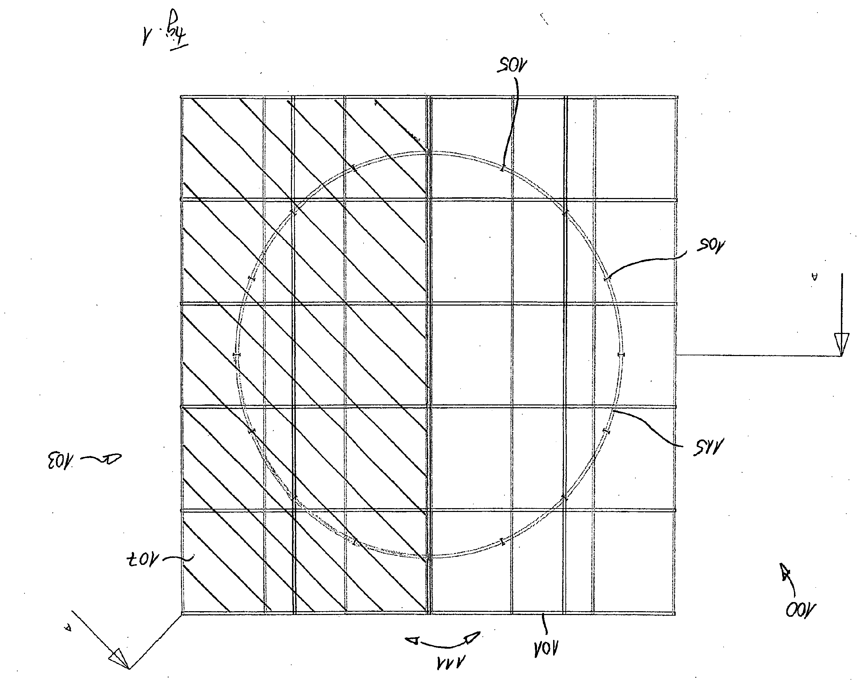

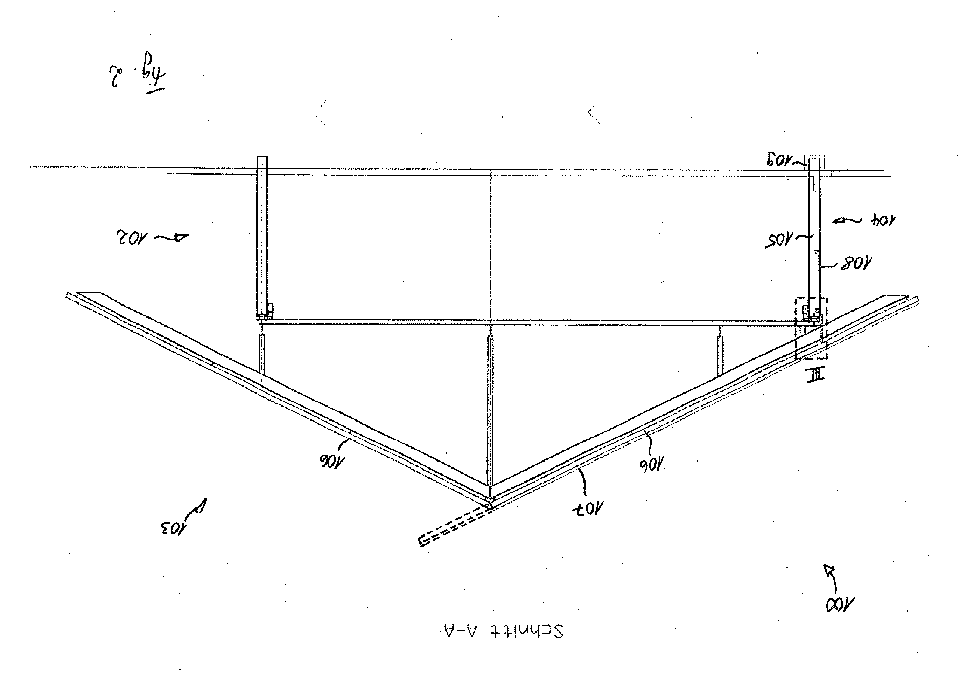

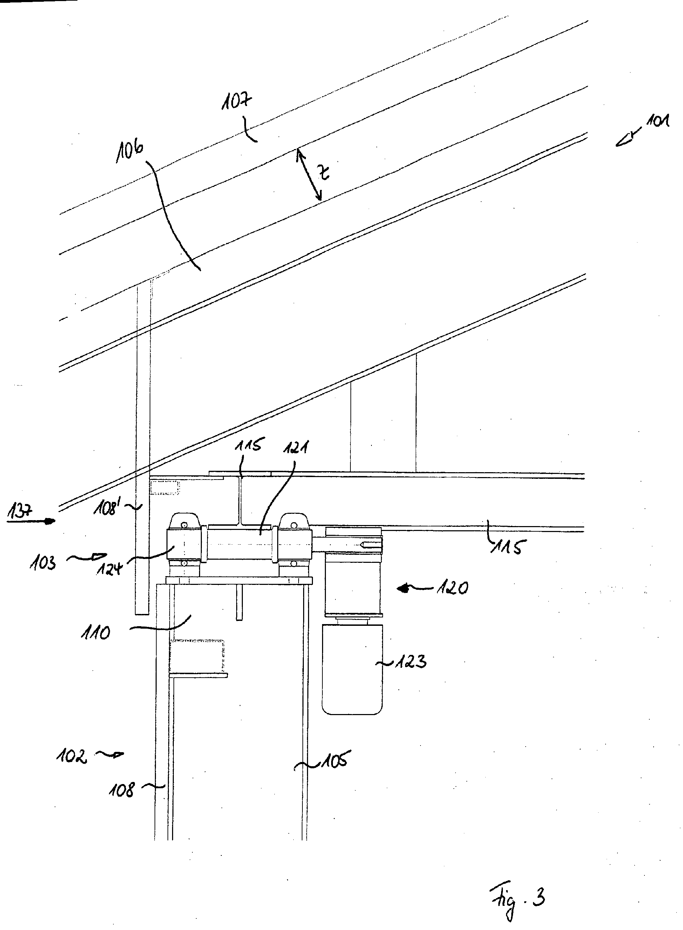

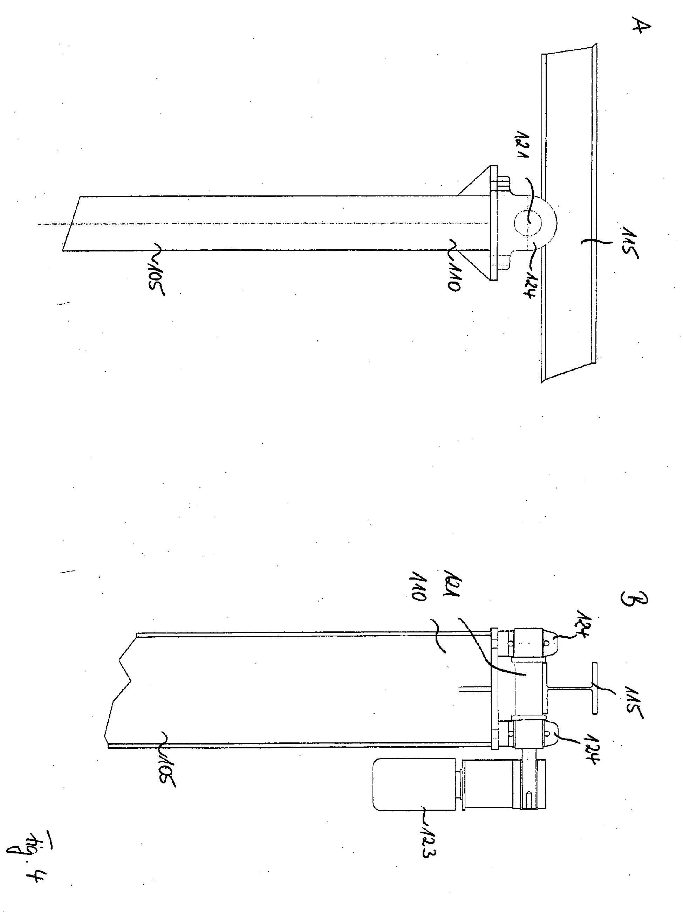

In den Fig. 1-5 ist ein Solaranlagengebäude in der Form einer Halle beschrieben und wird Solaranlagenhalle genannt. Die erfindungsgemäße Solarantagenhalle 100 weist ein bodenfest montierbares Hallenunterteil 102 und ein darauf drehbar gelagertes Hallenoberteil 103 auf. Das Hallenoberteil 103 hat ein Dach 101, wobei dieses Dach 101 eine dichtende Dachhaut 106 und darauf montierte Solarmodule 107 aufweist. Die Solarmodule 107 sind in Fig. 1 als Schraffur eingetragen. In der dargestellten Ausführung handelt es sich bei dem Dach 101 um ein Satteldach, Es kann jedoch ebenfalls jede andere geeignete Dachform vorgesehen sein, insbesondere auch ein Pultdach. Das Dach 101 wird wie üblich gebildet. In der dargestellten Ausführung ist es eine Metallkonstruktion. Es ist weiter vorgesehen, dass die Dachhälfte, auf der die Solarmodule 107 befestigt sind, über die andere Dachhälfte hinaus verlängert sein kann, wie in Fig. 2 durch die gestrichelten Linien angedeutet. Hierdurch wird die Solarfläche günstig vergrößert. Das Hallenunterteil 102 weist Wände 104 auf. Erfindungsgemäß sind diese Wände durch Steher 105 und eine Verplankung 108 gebildet. Die Steher 105 sind im Fundament 109 eingespannt. Je nach Ausbildung des Hallenoberteils 103, kann auch dort eine Verplankung 108' (Fig. 3) montiert sein, wodurch Schnee und Wind abgehalten werden. Die Verplankungen 108 und 108' überlappen dabei bevorzugt einander (vgl. Fig. 3).

Der Antrieb des Hallenoberteils 103 erfolgt über einen Rollenantrieb. Erfindungsgemäß sind auf der Oberseite jedes Stehers 105, auch Stützenkopf genannt, des Hallenunterteils 102 Rollen 121 fixiert, über die das Hallenoberteil 103 in Rotation versetzt wird. Auf jedem Steher 105 ist vorzugsweise eine Rolle 121 angeordnet, wobei ein Teil der Rollen passiv sein kann, d.h. keinen Antrieb aufweisen. Die in den Fig. dargestellten Rollen 121 sind alle mit einer Antriebseinrichtung 120 gezeigt. Es hat sich jedoch herausgestellt, dass bei einer Solaranlagenhalle 100, wie sie in den Fig. dargestellt ist, mit einem Durchmesser von ca. 22 m mit sechzehn Stehern 105. von den sechzehn vorgesehenen Rollen 121 lediglich vier angetrieben zu sein brauchen. Die übrigen sind passive Rollen.

In den Fig. 3-5 ist der Antrieb detailliert dargestellt. An dem Hallenoberteil 103 ist eine Rundschiene 115 montiert. Die an dem oberen Ende 110 der Steher 105 montierten Rollen 121 werden mit Hilfe eines Motors 123 angetrieben. Die Rollen 121 sind dabei seitlich in entsprechenden Lagern 124 gelagert. Durch die Rollbewegung der Rollen 121 wird die Rundschiene 120 und damit das Hallenoberteil 103 in Bewegung versetzt, so dass das Hallenoberteil 103 eine Rotationsbewegung vollführt, angedeutet durch den Pfeil 111 in Fig. 1. Hierdurch können die Solarmodule 107 stets günstig der einstrahlenden Sonne zugewendet werden.

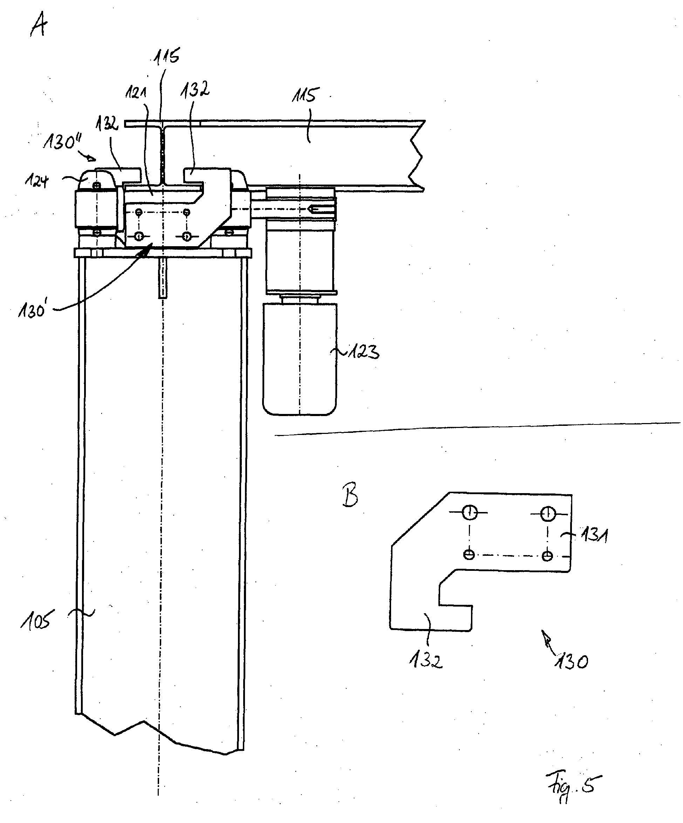

Figur 5 erläutert den Aufbau und die Anordnung der Verankerungsvorrichtung 130, wobei die Fig. 5A diese Vorrichtung in ihrer funktionsgemäßen Anordnung darstellt und die Fig. 5B die Verankerungsvorrichtung 130 als gesondertes Element darstellt. Bei der Verankerungsvorrichtung 130 handelt es sich in dem bevorzugten Ausführungsbeispiel um ein flächiges Element 131, das an zumindest einer Seite zumindest einen hakenförmigen Fortsatz 132 aufweist, der die Rundschiene 115 zumindest teilweise umgreift. Der hakenförmige Fortsatz 132 ist zumindest auf der Außenseite des Hallenoberteils 103 vorgesehen, so dass bei von außen auftreffendem Winddruck, angedeutet durch den Pfeil 137, der hakenförmige Fortsatz 132 ein Kippen des Hallenoberteils 103 verhindert. Da Wind und andere Störeinflüsse erfahrungsgemäß überwiegend von der Außenseite der Solaranlagenhalle 100 einwirken, ist in der Regel das Vorsehen einer Verankerungsvorrichtung 130 mit einem auf der Außenseite angeordneten hakenförmigen Fortsatz 132 ausreichend. Bevorzugt sind, wie in Fig. 5A gezeigt, jedoch zwei zueinander spiegelbildlich, d. h. beidseitig versetzt, angeordnete Verankerungsvorrichtungen 130 pro Rolle 121 montiert, wobei vorzugsweise eine Verankerungsvorrichtung 130' unmittelbar vor der Rolle 121 und die andere Verankerungsvorrichtung 130" unmittelbar hinter der Rolle 121 montiert sind. Dadurch wird eine optimale Verankerung erzielt. Die Verankerungsvorrichtung 130 kann auch anders gestaltet sein, beispielsweise kann sie aus Rundstäben aufgebaut sein, als Gussteil oder als mitlaufende Lagerung ausgebildet sein.

Bevorzugt ist bei der oben beschriebenen Solaranlagenhalle 100 auf dem Hallenoberteil 103 eine dichtende Dachhaut 106 vorgesehen. Als eine solche dichtende Dachhaut sind beispielsweise Blech oder Faserzement geeignet, wie es für die Bedeckung von Gebäuden wie beispielsweise Hallen bekannt ist. Auf dieser Dachhaut sind mit einem gewissen Abstand die Solarmodule 107 befestigt. Der Abstand ist bevorzugt so dimensioniert, dass eine Belüftung der Solarmodule erfolgt.

Es wurde herausgefunden, dass bei entsprechender Beabstandung von dichtender Dachhaut 106 und den Solarmodulen 107 eine Art Kamineffekt zwischen den Solarmodulen und der Dachhaut stattfindet, so dass die sich bildende warme Luft in diesen Bereich beständig abgeführt wird und durch kühlere Umgebungsluft ersetzt wird. Der zur Erzielung dieser Wirkung einzuhaltende Abstand Z zwischen den Solarmodulen und der Dachhaut ist dabei abhängig von den eingesetzten Solarmodulen, der Art der dichtenden Dachhaut, der Dachneigung der Solaranlagenhalle und der Größe der gesamten Anlage. Bei einer beispielhaften Anlage mit einem Durchmesser der Halle von ca, 22 m, die als 16-Eck mit Teilkreisen von 22,5° gestaltet ist, ergibt sich, einschließlich der Hutfläche, eine Solarfläche von ca. 560 m² bei einem Satteldach. Die Anlage hat eine Lagerfläche von ca. 380 m². Bei einer solchen Anlage wurde ein Abstand Z zur Zellenkühlung von unten mit 5 cm bis 40 cm als vorteilhaft erkannt. Allgemein ausgedrückt wird konstruktionsbedingt ein Abstand Z zwischen den Solarmodulen 107 und der dichtenden Dachhaut 106 geschaffen, wodurch eine günstige Hinterlüftung der Solarmodule erzielt wird. Ein solcher Abstand Z kann durch einen entsprechenden Unterbau erzielt werden. Es kann sich bei einem solchen beispielsweise um in Längsrichtung, d. h. von der unteren Dachkante zur oberen Dachkante verlaufende Platten, Kanthölzer oder Metallprofile handeln, so dass eine entsprechende Beabstandung der Solarmodule 107 von der dichtenden Dachhaut 108 erzielt werden kann. Alternativ ist vorgesehen, dass der erforderliche Abstand bereits durch die geeignete Auswahl der dichtenden Dachhaut 106 selber erzielt wird, So kann beispielsweise Trapezblech verwendet werden, das z. B. eine Höhe von 150 mm aufweist. Die Form der Dachhaut 106 bedingt hierbei die Belüftungswirkung,

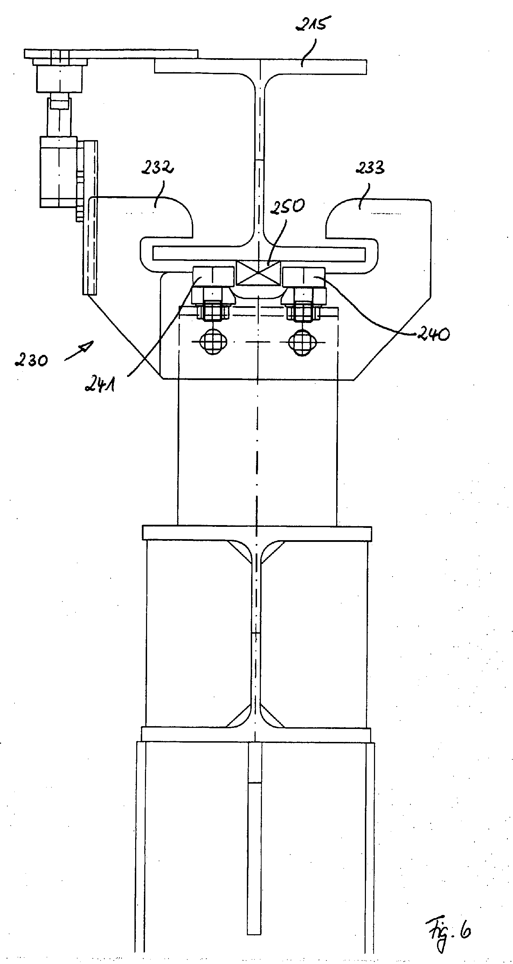

In Fig. 6 ist eine weitere Ausführungsform einer erfindungsgemäßen Verankerungsvorrichtung dargestellt. Die Verankerungsvorrichtung 230 ist ähnlich wie die Verankerungsvorrichtung 130 ein flächiges Element 231. Es ist mit zwei hakenförmigen Fortsätzen 232 und 233 ausgestattet. Die hakenförmigen Fortsätze 232 und 233 umgreifen eine Rundlaufschiene 215. Die Verankerungsvorrichtung 230 weist darüber hinaus zwei Führungsrollen 240, 241 auf. Diese Führungsrollen 240, 241 umgreifen eine auf der Rundlaufschiene 215 montierte Laufschiene 250. Damit werden zusätzliche Laufstabilität und Laufruhe bereitgestellt Es ist für den Fachmann ersichtlich, dass eine Stabilisierung auch ohne das Vorsehen von hakenförmigen Fortsätzen 232, 233, alleine durch die seitlich an die Laufschiene anliegenden Führungsrollen 240, 241 zu erzielen ist. Weiter Ist auch eine einzige Führungsrolle 240 bzw. 241 pro Verankerungsvorrichtung 230 ausreichend.

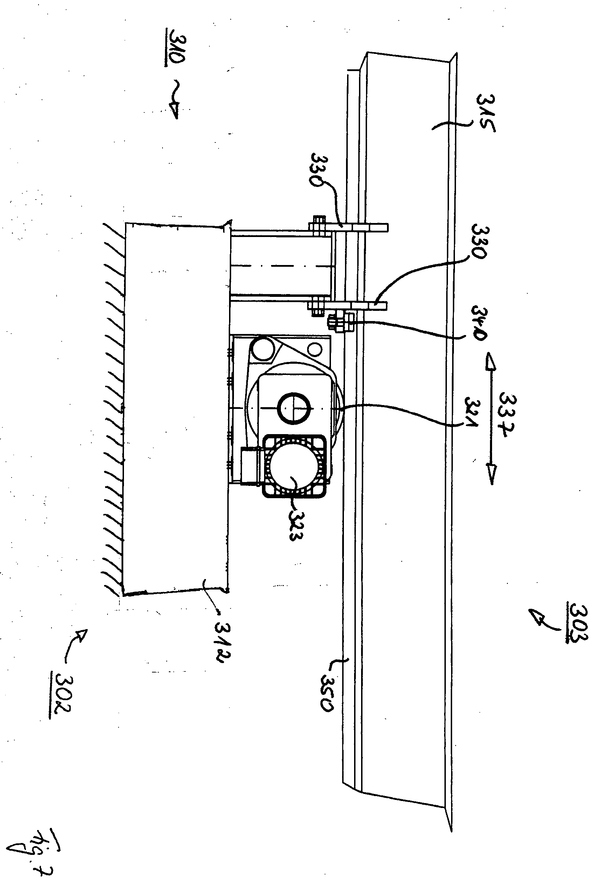

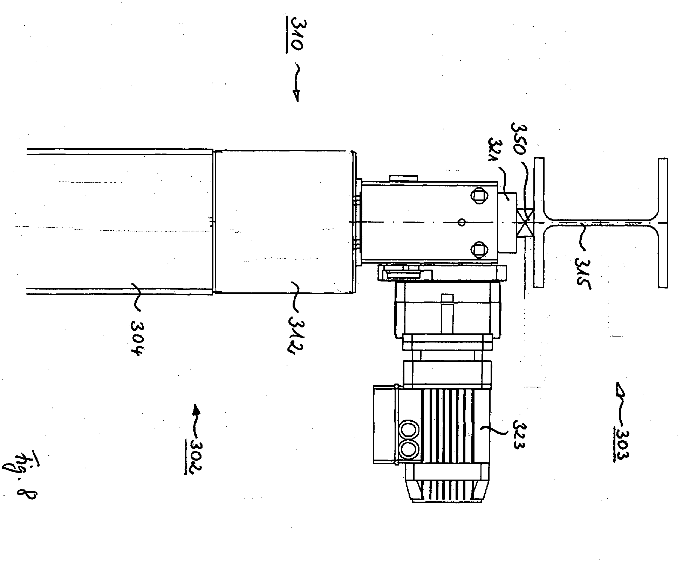

In den Fig. 7 und 8 sind Details einer weiteren Ausführungsform eines erfindungsgemäßen Solaranlagengebäudes dargestellt. Anders als die anhand der Fig. 1-5 beschriebene Solaranlagenhalle 100 ist in den Fig. 7 und 8 ein Gebäude in Massivbauweise, beispielsweise mit Ziegel-, Beton- oder Porenbetonwänden beschrieben. Auf dem oberen Ende 310 des Gebäudeunterteils 302, dargestellt ist eine Wand 304, ist ein Betongurt 312 ausgebildet. Auf diesen Betongurt sind über den Umfang des Gebäudes verteilt sowohl passive Rollen (nicht dargestellt) als auch antreibbare Rollen 321 montiert. Der Antrieb der Antriebsrollen 321 erfolgt über den Motor 323. Das Gebäudeoberteil 303 ist nur ausschnittsweise durch die Rundlaufschiene 315 dargestellt. Auf dieser Rundlaufschiene 315 ist das Gebäudeoberteil 303, beispielsweise ähnlich wie in den Fig. 1-5 dargestellt, gelagert und befestigt, so dass durch die Drehbewegung der Rundlaufschiene 315 das Gebäudeoberteil rotiert wird. Wie zu Fig. 6 beschrieben, ist auf der Unterseite der Rundlaufschiene 315 eine Laufschiene 350 befestigt. Diese ist bevorzugt aus einem abriebfesten Material. Die Rollen 321 bewegen die Rundlaufschiene 315 und damit das Gebäudeoberteil mit dem Dach über Reibschluss mit der Laufschiene 350, Die Rolle 321 bleibt dabei ortsfest und bewegt die Rundlaufschiene, wie in Fig. 7 durch den Pfeil 337 angedeutet. In der Darstellung der Fig. 7 ist zudem wiederum eine Verankerungsvorrichtung 330 mit Führungsrolle 340 dargestellt, wie sie detailliert anhand Fig. 6 beschrieben worden ist.

### Bezugszeichenliste

- 100: Solaranlagenhalle
- 101: Dach
- 102; 302: Hallenunterteil
- 103; 303: Hallenoberteil
- 104; 304: Wand
- 105: Steher
- 106: Dachhaut
- 107: Solarmodul
- 108: Verplankung
- 109: Fundament
- 110: Oberes Ende von 105
- 111: Pfeil
- 115; 215; 315: Rundlaufschiene
- 120: Antriebseinrichtung
- 121; 321: Rolle
- 123; 323: Motor
- 124: Lager
- 130; 230; 330: Verankerungsvorrichtung
- 131; 231: flächiges Element
- 132; 232; 332: hakenförmiger Fortsatz
- 137: Pfeil
- 240; 241; 340: Führungsrolle
- 250; 350: Laufschiene
- 310: Oberes Ende von 302
- 312: Betongurt
- 337: Pfeil

## Patentansprüche

1. In Abhängigkeit vom relativen Sonnenstand im Tagesverlauf nachführbares Solaranlagengebäude (100), das aus einem Gebäudeunterteil (102; 302) und einem darauf gelagerten Gebäudeoberteil (103; 303) mit Dach (101) besteht, wobei auf dem Dach Solarmodule (107) montierbar sind, wobei eine Antriebseinrichtung vorgesehen ist, mit der Gebäudeoberteil und Gebäudeunterteil rotatorisch gegeneinander verdrehbar sind,
**dadurch gekennzeichnet, dass**
an dem Gebäudeunterteil zumindest eine antreibbare Rolle (121; 321) ortsfest gelagert ist, durch die eine an dem Gebäudeoberteil fixierte Rundlaufschiene (115; 215; 315) drehbar geführt ist, so dass eine Relativbewegung zwischen dem Gebäudeoberteil mit Dach und dem Gebäudeunterteil erfolgt.

2. Nachführbares Solaranlagengebäude nach einem der vorstehenden Ansprüche, **dadurch gekennzeichnet, dass** zusätzlich zu der zumindest einen antreibbaren Rolle zumindest eine passive Rolle an dem Gebäudeunterteil vorgesehen ist.

3. Nachführbares Solaranlagengebäude nach Anspruch 1 oder 2, **dadurch gekennzeichnet, dass** die Rollen auf dem oberen Ende (110) von Stehern (105), die Bestandteil des Gebäudeuntertells sind, oder auf dem oberen Ende (310) von Wänden (104; 304) des Gebäudeunterteils montiert sind.

4. Nachführbares Solaranlagengebäude nach einem der vorstehenden Ansprüche, **dadurch gekennzeichnet, dass** eine Laufschiene (250; 305) auf der Rundlaufschiene montiert ist, auf welcher die zumindest eine Rolle läuft.

5. Nachführbares Solaranlapengebäude nach einem der vorstehenden Ansprüche, **dadurch gekennzeichnet, dass** eine Verankerungsvorrichtung (130; 230; 330) vorgesehen ist, mit der eine verankerung des Gebäudeoberteils auf dem Gebäudeunterteil erreicht wird.

6. Nachführbares Solaranlagengebäude nach Anspruch 4 und 5, **dadurch gekennzeichnet, dass** die Verankerungsvorrichtung zumindest eine Führungsrolle (240; 241; 340) aufweist, welche an die Laufschiene seitlich anliegt.

7. Nachführbares Solaranlagengebäude nach Anspruch 5 oder 6, **dadurch gekennzeichnet, dass** je eine Verankerungsvorrichtung vor und/oder nach jeder antreibbaren Rolle und/oder passiven Rolle vorgesehen ist.

8. Nachführbares Solaranlagengebäude nach einem der vorstehenden Ansprüche, **dadurch gekennzeichnet, dass** eine Positionsbestimmungsvorrichtung vorgesehen ist, mit deren Hilfe die Position des Gebäudeoberteils im Verhältnis zum Gebäudeunterteil feststellbar ist.

9. Nachführbares Solaranlagengebäude nach einem der vorstehenden Ansprüche, **dadurch gekennzeichnet, dass** am Gebäudeoberteil und am Gebäudeunterteil zumindest je ein Endschalter vorgesehen sind, mit deren Hilfe eine Referenzierung und Bestimmung der Absolutposition des Gebäudeoberteils möglich ist.

10. Nachführbares Solaranlagengebäude nach einem der vorstehenden Ansprüche, **dadurch gekennzeichnet, dass** ein Windmessgerät vorgesehen ist, dessen Daten an eine Steuerung gemeldet werden, wobei das Solaranlagengebäude ab einer vorgebbaren Windstärke in eine Position verbringbar ist, so dass der Wind möglichst geringen Schaden an dem Gebäude anrichten kann.
